# EUROPÄISCHE PATENTANMELDUNG

(11) **EP 3 909 762 A1**
(43) Veröffentlichungstag der Anmeldung: **17.11.2021**
(21) Anmeldenummer: 20173861.4
(22) Anmeldetag: 11.05.2020
(51) Int. Cl.: B32B 27/08, B32B 27/18, B32B 27/32, B32B 3/28, E04D 3/35

(54) **DACHPLATTE AUS KUNSTSTOFF**

(71) Anmelder: Recyplast Holding AG, 6302 Zug (CH)
(72) Erfinder: Marti, Silvio, 8640 Rapperswil (SG) (CH); Dicken von Oetinger, Christoph, 8700 Küsnacht (ZH) (CH)
(74) Vertreter: Durm Patentanwälte PartG mbB

(57) **Zusammenfassung**

Eine Dachplatte aus Kunststoff zur Bedachung von Gebäuden umfasst eine Tragschicht (2), eine Außenschicht (3) und eine Innenschicht (4). Die Tragschicht (2) ist im Wesentlichen hergestellt durch Extrudieren eines aus gebrauchten Getränkekartons gewonnenen Recyclats, welches aus LDPE und kleinen Aluminium-Partikeln besteht. Die Außenschicht (3) ist durch Extrudieren einer Mischung von 50 bis 80 % Aluminiumhydroxid, 10 bis 20 % Ethylen-Vinylacetat und 10 bis 20 % LDPE hergestellt. Die Innenschicht (4) besteht aus Polyethylen, vorzugsweise ebenfalls aus Recyclat, das aus gebrauchten Getränkekartons gewonnen wurde. Die aus dem Recyclat stammenden Aluminium-Partikel (2a, 3a, 4a) finden sich in der Tragschicht (2), ggf. in der Außenschicht (3) und ggf. in der Innenschicht (4) in gleichmäßiger Verteilung wieder.

## Beschreibung

Die Erfindung betrifft eine Dachplatte aus Kunststoff, insbesondere zur Bedachung von Gebäuden.

Wohnhäuser und Nutzgebäude haben die unterschiedlichsten Dachformen. Je nach Stil, Dachform, Dachneigung und Umgebung kommen ganz unterschiedliche Formen und Materialien für eine Dacheindeckung zum Einsatz. In jedem Fall soll das Dach robust und langlebig sein sowie gegen Hitze, Kälte, Sturm und Regen schützen. Gängige Materialien zur Dacheindeckung sind Dachziegel, Dachsteine aus Beton, Schieferplatten, Faserzementplatten oder auch Metalle wie Zink, Kupfer und Aluminium.

Für einfachere Nutz- und Wirtschaftsgebäude werden oft Wellplatten oder Profilplatten aus durchsichtigem oder transparentem, optional farbigem Kunststoff eingesetzt. Je nach Einsatzzweck und individuellen Anforderungen sind solche Wellplatten zum Beispiel aus Polycarbonat, Acryl, PVC oder Polyester hergestellt. In der Regel bestehen sie aus einer einzigen Kunststoff-Schicht, welche sowohl Form und Festigkeit als auch Funktion und Aussehen der Dacheindeckung bestimmt. Größere Dächer werden üblicherweise nicht mit solchen Kunststoff-Platten eingedeckt.

Für die Bedachung und teilweise auch Wandbekleidung von größeren Wirtschaftsgebäuden werden oft auch Dachplatten aus Bitumen, insbesondere Bitumen-Wellplatten eingesetzt. Bitumen-Wellplatten können einen mehrschichtigen Aufbau haben und bestehen beispielsweise je zur Hälfte aus Faserstoffen und Bitumen mit Kunststoff-Zusatz. Die Faserstoffe können zum Beispiel aus Recyclingpapier stammen.

Wichtige Eigenschaften einer Dachplatte zur Bedachung von Gebäuden sind Beständigkeit gegen Hitze, Regen, Sturm und Sonneneinstrahlung. Sie müssen stoßfest, biegefest und UV-beständig sein; zudem ein gutes Brandverhalten haben, das heißt schwer entflammbar oder zumindest normal entflammbar sein, also der Baustoff-Klasse B1 oder B2 nach deutscher Norm DIN 4102-1 entsprechen.

Nicht unwichtig für eine Dacheindeckung ist auch ein gutes Aussehen. Dachplatten aus Bitumen haben den Vorteil, dass sie in unterschiedlichen gedeckten Farben verfügbar sind und eine raue Oberfläche haben. Insbesondere Bitumen-Wellplatten haben deshalb optische Ähnlichkeit mit den viel teureren Dachziegeln.

Der Erfindung liegt das technische Problem zugrunde, eine Dachplatte aus Kunststoff, insbesondere zur Bedachung von Gebäuden zu schaffen, welche herkömmlichen Dachplatten aus Kunststoff oder Bitumen überlegen sind, und zwar sowohl hinsichtlich ihrer Eigenschaften als auch insbesondere hinsichtlich der Fertigungskosten.

Gelöst wird die Aufgabe durch eine Dachplatte mit den im Patentanspruch 1 angegebenen Merkmalen.

Die erfindungsgemäße Dachplatte besteht fast vollständig aus Kunststoff und hat einen mehrschichtigen Aufbau.

Kern der erfindungsgemäßen Dachplatte ist eine zwischen 2 und 5 mm dicke Tragschicht, welche die Form und die Festigkeit der Dachplatte bestimmt. Diese Tragschicht ist hergestellt durch Extrudieren eines speziellen Granulats aus Recyclat, das aus der Verbundfolie von Lebensmittel-Verpackungen, insbesondere aus der praktisch untrennbaren Verbundfolie gebrauchter Getränkekartons gewonnen wurde und im Wesentlichen aus Polyethylen geringer Dichte (LDPE) und darin enthaltenen kleinen Aluminium-Partikeln besteht. Die Aluminium-Partikel stammen aus der Verbundfolie der recyclierten Verpackungen. Das spezielle Verfahren, mit dem solche problematischen Aluminium-Kunststoff-Verbundfolien zu einem extrudierbaren Kunststoff-Granulat mit eingelagerten Aluminium-Partikeln hergestellt werden kann, ist in EP 2 942 173 A1 beschrieben.

Die aus der recyclierten Verbundfolie bzw. dem Recyclat stammenden Aluminium-Partikel finden sich in der Tragschicht der erfindungsgemäßen Dachplatte wieder, und zwar in gleichmäßiger Verteilung über den Querschnitt. Die in der Tragschicht eingelagerten Aluminium-Partikel aus dem Recyclat erhöhen die Festigkeit und Widerstandsfähigkeit der Tragschicht. Ein weiterer großer Vorteil besteht darin, dass das aus der Verbundfolie von Lebensmittelverpackungen, insbesondere gebrauchter Getränkekartons gewonnene Recyclat ein vergleichsweise billiger Rohstoff ist, insbesondere im Vergleich zu Bitumen.

Die erfindungsgemäße Dachplatte hat eine mit der Tragschicht fest verbundene Außenschicht, die im Vergleich zu der Tragschicht eine wesentlich geringere Dicke hat. Diese Außenschicht ist hergestellt durch Extrudieren einer Mischung aus Aluminiumhydroxid, Ethylen-Vinylacetat (EVA) und Polyethylen geringer Dichte (LDPE), mit einem Mischungsverhältnis, wie es im Patentanspruch 1 angegeben ist. Diese Außenschicht ist eine Funktionsschicht und macht die Dachplatte flammhemmend und wetterbeständig.

Auf der gegenüberliegenden, der Innenseite des zu bedachenden Gebäudes zugewandten Seite der Dachplatte ist auf die Tragschicht eine dünne Innenschicht aus extrudiertem Polyethylen aufgebracht. Diese innenliegende Deckschicht dient vor allem einer ansprechenden Optik der sichtbaren Innenseite bzw. Unterseite der Dachplatte. Polyethylen lässt sich leicht einfärben, indem es mit aufhellenden Farbstoffen versehen wird.

Die erfindungsgemäße dreischichtige Dachplatte besteht zum größten Teil aus Polyethylen und daneben relativ kleinen Gewichtsanteilen Aluminiumhydroxid als Brandhemmer und Ethylen-Vinylacetat in der der Wetterseite zugewandten Außenschicht. Zumindest das Polyethylen, aus dem die Tragschicht besteht, enthält kleine Aluminium-Partikel, die aus dem Recyclat stammen und gleichmäßig über den Querschnitt verteilt sind. Die Aluminium-Partikel in der Tragschicht erhöhen deren mechanische Stabilität, insbesondere also Stoß-, Druck- und Bruchfestigkeit. Da Aluminium völlig unempfindlich gegen Feuchtigkeit ist, erhöhen die eingelagerten Aluminium-Partikel auch die Wetterfestigkeit der Dachplatte.

Jeder der drei Schichten, also Tragschicht, Außenschicht und Innenschicht, können zusätzlich geringe Mengen von UV-Schutz und/oder Antioxidantien zugesetzt werden, um die Witterungsbeständigkeit weiter zu erhöhen.

Für die Herstellung der Tragschicht kann dem Recyclat ein Gewichtsanteil von bis zu 20 % mineralische Füllstoffe beigemischt sein, vorzugsweise Kalziumkarbonat.

Die zur Wetterseite gerichtete Außenschicht wird bevorzugt aus einer Mischung extrudiert, welche Gewichtsanteile von 60 bis 70 % Aluminiumhydroxid, 13 bis 17 % Ethylen-Vinylacetat (EVA) sowie 14 bis 16 % Polyethylen geringer Dichte (LDPE) enthält. Dabei besteht der Anteil von Polyethylen in der Außenschicht vorzugsweise aus dem gleichen Recyclat, aus dem im Wesentlichen die Tragschicht hergestellt ist und das aus LDPE und darin enthaltenen kleinen Aluminium-Partikeln besteht. Diese Aluminium-Partikel finden sich nach dem Extrudieren in der Außenschicht der Dachplatte wieder und sind dort gleichmäßig über den Querschnitt der Außenschicht verteilt. Die in die Außenschicht eingebetteten Aluminium-Partikel reflektieren das Sonnenlicht, bilden also einen zusätzlichen UV-Schutz. Die eingebetteten Aluminium-Partikel führen zudem zu unregelmäßigen Unebenheiten der Außenhaut der Dachplatte und geben dieser dadurch eine spezielle Haptik und Optik, welche sehr natürlich aussieht und aus Ton gebrannten Dachziegeln ähnlich ist.

Die Außenschicht kann ferner einen Anteil zwischen 3 und 6 % eines Haftvermittlers enthalten. Der Haftvermittler bewirkt ein besseres Einarbeiten des Aluminiumhydroxids in das Polymergemisch aus EVA und LDPE. Das verbessert die flammhemmende Wirkung. Optional kann die Außenschicht zusätzlich auch einen kleinen Anteil anorganischer Pigmente (Masterbatch) enthalten.

Die erfindungsgemäß aus extrudiertem Polyethylen bestehende Innenschicht kann entweder aus handelsüblichem frischen Polyethylen hergestellt sein. Bevorzugt wird jedoch auch diese dritte Schicht aus der gleichen Sorte von Recyclat hergestellt, aus dem im Wesentlichen die Tragschicht hergestellt ist, also aus Verbundfolie von Lebensmittel-Verpackungen gewonnenem Recyclat, das aus LDPE und Aluminium-Partikeln besteht. Auch in der Innenschicht finden sich dann wieder diese kleinen Aluminium-Partikel in gleichmäßiger Verteilung über den Querschnitt. Durch die Verwendung dieses speziellen Recyclats verringern sich die Materialkosten weiter. Auch führen die eingelagerten Aluminium-Partikel zu einem hübschen optischen Glitzereffekt. Die Innenschicht kann ferner ebenfalls anorganische Pigmente enthalten sowie geringe Mengen von Antioxidantien.

Alle drei Schichten der erfindungsgemäßen Dachplatte, also Tragschicht, Außenschicht und Innenschicht können zusätzlich mit einem handelsüblichen UV-Schutz versehen werden.

Ein Ausführungsbeispiel der erfindungsgemäßen Dachplatte wird nachstehend unter Bezugnahme auf die beigefügten Abbildungen näher beschrieben. Es zeigen:

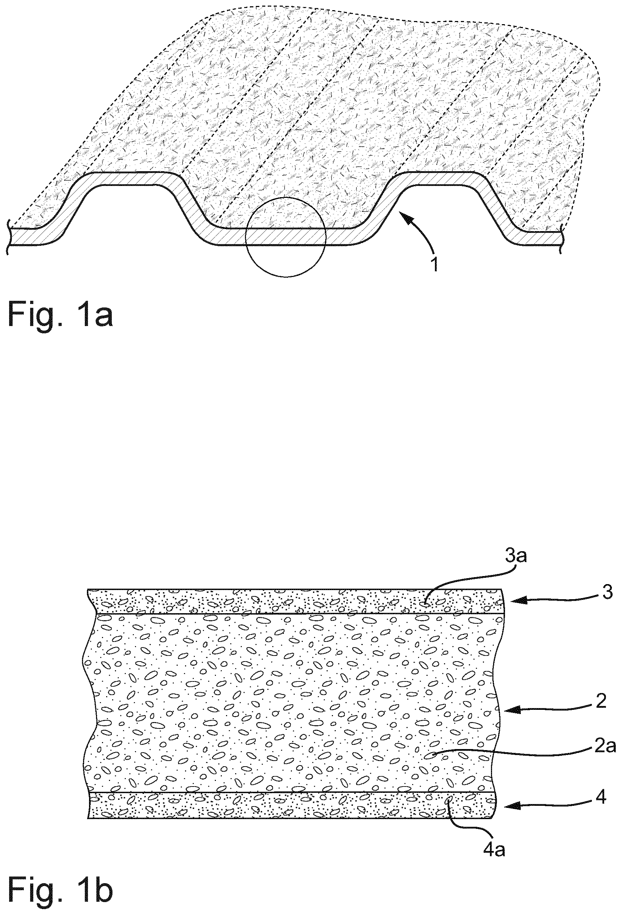

- Figur 1 a: eine gewellte Dachplatte, in einem Horizontalschnitt;
- Figur 1b: einen stark vergrößerten Ausschnitt von Fig. 1a.

Die in Fig. 1a dargestellte Dachplatte 1 hat einen wellenförmigen Querschnitt. Die Gesamtdicke beträgt ca. 5 mm.

Fig. 1b zeigt schematisch den dreischichtigen Aufbau der Dachplatte.

Die mit rund 4 mm dickste Schicht ist die Tragschicht 2, die den tragenden Kern der Dachplatte 1 bildet und deren Form und Festigkeit bestimmt. Die Tragschicht 2 wurde durch Extrudieren hergestellt, im Wesentlichen aus einem Recyclat, das aus der Verbundfolie von gebrauchten Getränkekartons gewonnen wurde und aus Polyethylen geringer Dichte (LDPE) und darin enthaltenen kleinen Aluminium-Partikeln besteht. Die aus dem Recyclat stammenden Aluminium-Partikel 2a finden sich in der Tragschicht 2 in gleichmäßiger Verteilung über deren Querschnitt.

Dem Polyethylen-Aluminium-Recyclat wurden vor dem Extrudieren ca. 10 Gewichts-Prozent Kalziumcarbonat als mineralischer Füllstoff beigemischt, ferner je ca. 0,5 % Antioxidantien und UV-Schutz.

Die Dachplatte 1 hat eine flammhemmend ausgerüstete und wetterbeständige Außenschicht 3, die zur Wetterseite weist. Im Vergleich zur Tragschicht 2 ist diese Außenschicht 3 relativ dünn; ihre Dicke beträgt hier ca. 0,5 mm. Auch die Außenschicht 3 besteht aus extrudiertem Kunststoff, allerdings mit anderer Zusammensetzung als die Tragschicht 2.

Das Material, aus dem die Außenschicht 3 hergestellt ist, hat einen Gewichtsanteil von 64 % Aluminiumhydroxid sowie 14 % desselben, aus gebrauchten Getränkekartons gewonnenen Recyclats wie das, aus dem im Wesentlichen die Tragschicht 2 hergestellt ist. Dritter Bestandteil ist Ethylen-Vinylacetat (EVA) mit einem Gewichtsanteil von ca. 15 %. Die Außenschicht 3 enthält 4,6 % Haftvermittler, 0,1 % Antioxidantien, 0,1 % UV-Schutz sowie 2 % anorganische Pigmente (Masterbatch).

Die aus dem Recyclat stammenden Aluminium-Partikel 3a finden sich in der Außenschicht 3 wieder und sind über deren Querschnitt gleichmäßig verteilt. Die Aluminium-Partikel 3a haben Durchmesser zwischen 0,1 mm und 0,3 mm, sind also deutlich kleiner als die Dicke der Außenschicht 3. Die eingebetteten Aluminium-Partikel 3a führen zu einer körnigen Struktur der sichtbaren Oberseite der Dachplatte 1, wie in Fig. 1 angedeutet.

Die zum Innern des zu bedachenden Gebäudes weisende Innenschicht 4 der Dachplatte 1 besteht im Wesentlichen aus Polyethylen und hat eine Dicke von ca. 0,5 mm. Die Innenschicht 4 ist fast ganz aus demselben, aus gebrauchten Getränkekartons gewonnenen Recyclat hergestellt wie das Recyclat, aus dem die Tragschicht 2 im Wesentlichen besteht und welches auch bei der Herstellung der Außenschicht 3 verwendet wird. Die aus dem Recyclat stammenden Aluminium-Partikel 4a sind gleichmäßig über den Querschnitt der Innenschicht 4 verteilt.

Die Innenschicht 4 enthält daneben etwa 2 % Gewichtsanteile anorganische Pigmente (Masterbatch), 0,4 % Antioxidantien und 0,5 % UV-Schutz. Die Innenschicht 4 dient vor allem der Farbgebung der von der Innenseite des Gebäudes sichtbaren Unterseite der Dachplatte 1.

### Bezugszeichen

- 1: Dachplatte
- 2: Tragschicht
- 2a: Aluminium-Partikel (in 2)
- 3: Außenschicht
- 3a: Aluminium-Partikel (in 3)
- 4: Innenschicht
- 4a: Aluminium-Partikel (in 4)

## Patentansprüche

1. Dachplatte aus Kunststoff, insbesondere zur Bedachung von Gebäuden, umfassend:
eine zwischen 2 und 5 mm dicke Tragschicht (2), welche die Form und die Festigkeit der Dachplatte (1) bestimmt und hergestellt ist durch Extrudieren eines Recyclats, das aus der Verbundfolie von Lebensmittel-Verpackungen, insbesondere gebrauchter Getränkekartons gewonnen wurde und im Wesentlichen aus Polyethylen geringer Dichte (LDPE) und darin enthaltenen kleinen Aluminium-Partikeln besteht, sodass die aus dem Recylat stammenden Aluminium-Partikel (2a) gleichmäßig über den Querschnitt der Tragschicht verteilt sind,
einer im Vergleich zu der Tragschicht dünnen, flammhemmenden und wetterbeständigen Außenschicht (3), die hergestellt ist durch Extrudieren einer Mischung von
a) 50 bis 80 % Gewichtsanteil Aluminiumhydroxid
b) 5 bis 25 % Gewichtsanteil Ethylen-Vinylacetat (EVA)
c) 5 bis 25 % Gewichtsanteil Polyethylen geringer Dichte (LDPE),
eine im Vergleich zur Tragschicht dünne Innenschicht aus extrudiertem Polyethylen.

2. Dachplatte nach Anspruch 1, **dadurch gekennzeichnet, dass** dem Recyclat der Tragschicht (2) 3 bis 20 %, vorzugsweise ungefähr 10 % mineralische Füllstoffe beigemischt sind.

3. Dachplatte nach Anspruch 1 oder 2, **dadurch gekennzeichnet, dass** die Tragschicht (2) zwischen 3 und 4 mm dick ist.

4. Dachplatte nach einem der vorhergehenden Ansprüche, **dadurch gekennzeichnet, dass** die Außenschicht (3) aus einer Mischung extrudiert ist, welche einen Gewichtsanteil von 60 bis 70 % Aluminiumhydroxid enthält.

5. Dachplatte nach einem der vorhergehenden Ansprüche, **dadurch gekennzeichnet, dass** die Außenschicht (3) extrudiert ist aus einer Mischung, welche einen Gewichtsanteil von 13 bis 17 % Ethylen-Vinylacetat (EVA) enthält.

6. Dachplatte nach einem der vorhergehenden Ansprüche, **dadurch gekennzeichnet, dass** die Außenschicht (3) durch Extrudieren einer Mischung hergestellt ist, welche einen Gewichtsanteil von 14 bis 16 % Polyethylen geringer Dichte (LDPE) enthält.

7. Dachplatte nach einem der vorhergehenden Ansprüche, **dadurch gekennzeichnet, dass** der Anteil von Polyethylen in der Außenschicht (3) aus Recyclat gebildet ist, das aus der Verbundfolie von Lebensmittel-Verpackungen, insbesondere gebrauchter Getränkekartons gewonnen wurde und im Wesentlichen aus Polyethylen geringer Dichte (LDPE) und darin enthaltenen kleinen Aluminium-Partikeln besteht, sodass die aus dem Recylat stammenden Aluminium-Partikel (3a) gleichmäßig über den Querschnitt der Außenschicht verteilt sind

8. Dachplatte nach einem der vorhergehenden Ansprüche, **dadurch gekennzeichnet, dass** die Außenschicht (3) 3 bis 6 %, vorzugsweise 4 bis 5 % eines Haftvermittlers enthält.

9. Dachplatte nach einem der vorhergehenden Ansprüche, **dadurch gekennzeichnet, dass** die Außenschicht (3) einen Gewichtsanteil von 1 bis 3 %, vorzugsweise ungefähr 2 % anorganische Pigmente enthält.

10. Dachplatte nach einem der vorhergehenden Ansprüche, **dadurch gekennzeichnet, dass** die Innenschicht (4) hergestellt ist durch Extrudieren eines Recyclats, das aus der Verbundfolie von Lebensmittel-Verpackungen, insbesondere gebrauchter Getränkekartons gewonnen wurde und im Wesentlichen aus Polyethylen geringer Dichte (LDPE) und darin enthaltenen kleinen Aluminium-Partikeln besteht, sodass die aus dem Recylat stammenden Aluminium-Partikel (4a) gleichmäßig über den Querschnitt der Innenschicht verteilt sind

11. Dachplatte nach einem der vorhergehenden Ansprüche, **dadurch gekennzeichnet, dass** die Innenschicht einen Gewichtsanteil von 1 bis 3 %, vorzugsweise ungefähr 2 % anorganische Pigmente enthält.

12. Dachplatte nach einem der vorhergehenden Ansprüche, **dadurch gekennzeichnet, dass** die Innenschicht (4) eine Dicke von 0,2 bis 0,7 mm, vorzugsweise 0,3 bis 0,6 mm hat.

13. Dachplatte nach einem der vorhergehenden Ansprüche, **dadurch gekennzeichnet, dass** die Außenschicht (3) eine Dicke von 0,3 bis 0,7 mm, vorzugsweise 0,4 bis 0,6 mm hat.

14. Dachplatte nach einem der vorhergehenden Ansprüche, **dadurch gekennzeichnet, dass** die aus dem Recyclat stammenden Aluminium-Partikel (2a, 3a, 4a) einen Durchmesser von 0,1 bis 0,3 mm haben.

15. Dachplatte nach einem der vorhergehenden Ansprüche, **dadurch gekennzeichnet, dass** das in der Tragschicht (2), der Außenschicht (3) und/oder der Innenschicht (4) enthaltene Polyethylen jeweils aus dem gleichen, aus LDPE und Aluminium-Partikeln bestehenden Recyclat gebildet ist.
